# EUROPÄISCHE PATENTSCHRIFT

(11) **EP 1 579 937 B1**
(45) Veröffentlichungstag und Bekanntmachung des Hinweises auf die Patenterteilung: **29.07.2009**
(21) Anmeldenummer: 05005465.9
(22) Anmeldetag: 14.03.2005
(51) Int. Cl.: B23B 51/10

(54) **Entgratmesser zum Entgraten von Bohrungsrändern**
Deburring blade for chamfering holes
Lame d'ébavurage pour le chanfreinage des trous

(30) Priorität: 25.03.2004 DE 102004014659
(43) Veröffentlichungstag der Anmeldung: 28.09.2005
(73) Patentinhaber: Heule Werkzeug AG, 9436 Balgach (CH)
(72) Erfinder: Heule, Heinrich, 9434 Au SG (CH)
(74) Vertreter: Riebling, Peter

(56) Entgegenhaltungen:
- EP-A- 0 291 563
- EP-A- 0 370 210
- EP-A- 1 356 884
- DE-A1- 19 712 377

## Beschreibung

Gegenstand der Erfindung ist ein Entgratmesser nach dem Oberbegriff des Patentanspruchs 1. Ein derartiges Entgratmesser ist aus dem Dokument DE 197 12 377 A bekannt.

Mit dem, auf den gleichen Anmelder zurückgehenden, sogenannten DEFA-Messer ist eine erste Ausführungsform eines Schneidmessers bekannt geworden, bei dem die Schneidkante gerade und vertikal ausgebildet ist. Am vorderen freien Ende der Schneidkante ist eine radial nach innen schräg geneigte Steuerfläche angeordnet, die nicht schneidet und die nur als Steuerfläche für die vertikal ausgerichtete Schneidkante dient. Die schräg geneigte Steuerfläche geht hierbei in eine horizontale Stirnseite über.

Vorteil dieses sogenannten DEFA-Messers ist, dass man mit guter Genauigkeit den Fasendurchmesser der zu entgratenden Bohrung einstellen kann und der sich während des Entgratvorganges auch nicht verändert.
Dies wird damit begründet, dass wegen der vertikalen Schneidkante eine gute Schneidaktion erzielt wird, weil durch die sich an die vertikale Schneidkante anschließende, schräg geneigte Steuerkante zwangsgesteuert ist.

Beim Fehlen dieser schräg geneigten Steuerkante würde das DEFA-Messer lediglich als Senkwerkzeug arbeiten, ohne dass es sich in der Bohrung zentriert.

Mit der weiteren Ausführungsform des gleichen Anmelders bezüglich eines GHS-Messer ist eine andere Schneidgeometrie offenbart worden, die im Wesentlichen aus einer schräg radial einwärts gerichteten Schneidkante besteht, die an ihrem freien vorderen Ende unmittelbar in eine unwirksame, nicht schneidende Stirnseite übergeht. Bei dieser Ausführung fehlt also die sogenannte Steuerkante, die bei dem DEFA-Messer vorhanden war.

Vorteil dieses bekannten GHS-Messers war, dass ein großer Vorschub gefahren werden konnte und eine saubere Winkelgenauigkeit der zu entgratenden Phase erreicht werden konnte. Hierbei entstand dann nur ein kleiner sekundärer Grat.

Nachteil der bekannten Anordnung war jedoch, dass die Steuerkante fehlte, die zu einer inkonstanten, ungleichen Fase führen konnte. Beim Stumpfwerden des Messers konnte daher ein exakter Fasendurchmesser nicht mehr garantiert werden.

Aufgabe der Erfindung ist es, ein Entgratmesser zum Entgraten von Bohrungsrändern an Werkstücken der eingangs genannten Gattung bereit zu stellen, welches auch einen großen zu entfernenden Grat des Bohrungsrandes mit hohem Wirkungsgrad entfernt und die Fasen bzw. die Ansenkung der Bohrungsränder und insbesondere der Winkel der Ansenkung nahezu unabhängig vom Verschleiß der Schneidkanten sehr genau eingehalten werden und eine genaue Steuerung des Schneidmessers durch eine Steuerfläche erreicht wird.

Hier setzt die Erfindung ein, die ein neuartiges Schneidmesser vorsieht, wobei die mindestens eine Schneidpartie eine erste Schneidkante aufweist, an die sich unmittelbar oder mittelbar eine zweite Schneidkante anschließt, an die sich mittelbar über einen Übergang eine nicht schneidende Freikante anschließt, welche radial zur Drehachse im Bezug auf die zweite Schneidkante rückversetzt ist. Hierbei schließt die erste Schneidkante mit der Drehachse einen Winkel im Bereich von etwa 45° bis 120° ein und die zweite Schneidkante zum einen mit der Drehachse einen Winkel im Bereich von 0° bis 90° und zum anderen mit der ersten Schneidkante einen Außenwinkel von größer 180. Dabei befindet sich entgegen der Drehrichtung gesehen hinter der Freikante eine Steuerkante, welche mindestens teilweise den gleichen radialen Abstand zur Drehachse hat, wie die zweite Schneidkante. Insbesondere schließt dabei die Freikante mit der zweiten Schneidkante einen Winkel zwischen etwa 90° und 270° ein. Die Erfindung bezieht sich auf links- und/oder rechtsdrehende Messer.

Die Erfindung sieht also ein neuartiges Schneidmesser vor, das wie folgt ausgebildet ist, wobei die folgende Beschreibung von der Längsmittenachse des Grundkörpers des Schneidmesser ausgeht:
In axialer Richtung gesehen, wird zunächst eine erste Schneidkante als Randbegrenzung einer ersten Freifläche vorgesehen, welche erste Schneidkante entweder genau vertikal ausgerichtet ist oder einen Winkel zur Vertikalen aufweist.
Am freien vorderen Ende dieser ersten vertikalen Schneidkante schließt sich eine schräg einwärts auf die Längsmittenachse, vom Zentrum des Grundkörpers des Schneidmessers nach außen gerichtete zweite Schneidkante als Randbegrenzung einer zweiten Freifläche an, welche zweite Schneidkante einen beliebigen Winkel zwischen 0° und 90° zur ersten vertikalen Schneidkante aufweist.

Am vorderen freien Ende dieser geneigten zweiten Schneidkante schließt sich eine Freikante als Randbegrenzung einer Steuerfläche an, welche Freikante etwa einen gleichen Winkel wie die geneigte zweite Schneidkante aufweist. Diese Freikante ist nichtschneidend ausgebildet. Es ist jedoch nicht zwingend notwendig, dass die Freikante genau den gleichen Winkel wie die schräg geneigte zweite Schneidkante haben muss. Der Winkel der Freikante kann beispielsweise um +/- 90° von dem Winkel der zweiten Schneidkante abweichen.

Mit dem neuartigen Messer werden nun die Vorteile der beiden oben genannten Messer des Anmelders erreicht, ohne die Nachteile hierbei in Kauf nehmen zu müssen.

Mit der vertikalen ersten Schneidkante wird der Vorteil erreicht, dass bei einem großen zu entfernenden Grat des Bohrungsrandes, dieser Grat mit hohem Wirkungsgrad entfernt wird, weil eine besonders aggressive Schneidaktion gewährleistet ist.

Mit der sich daran anschließenden schräg geneigten zweiten Schneidkante wird der Vorteil erzielt, dass die Fasen genau arbeiten, d. h. die Oberfläche und der Winkel der Ansenkung sehr genau eingehalten werden, unabhängig davon, wie stark die Schneidkanten verschleißen.

Mit der sich an der zweiten Schneidkante am vorderen Bereich anschließenden Steuerfläche mit Steuerkante wird eine genaue Steuerung des Schneidmessers erreicht.

Dies wird damit erklärt, dass nach der Vollendung des Fasvorganges die Steuerkante der Steuerfläche an der Fase anliegt und ein weiteres, nicht mehr erwünschtes Schneiden der Fase verhindert. Damit wird sozusagen eine Begrenzung der Schneidaktion an der Fase gewährleistet.

Diese Steuerfläche mit Steuerkante kann auch als "Freilauf' bezeichnet werden, weil auf Grund der Anordnung dieser Steuerfläche mit Steuerkante die Schneidaktion sanft beendet wird.

Während also die annähernd vertikale erste Schneidkante aggressiv arbeitet, die sich daran anschließende geneigte zweite Schneidkante genau arbeitet, sorgt die sich auf der daran sich anschließenden Steuerfläche befindliche Steuerkante für eine Begrenzung der Schneidaktion, wenn die Schneidaktion fertig gestellt ist.

Damit wird ein vollständig neues Messer beschrieben, welches die Vorteile der vorgenannten Messer vereinigt, ohne deren Nachteile in Kauf nehmen zu müssen.

Im Folgenden wird die Erfindung an Hand von lediglich einen Ausführungsweg darstellende Zeichnungen näher erläutert. Hierbei gehen aus den Zeichnungen und ihrer Beschreibung weitere Merkmale und Vorteile der Erfindung hervor.

Es zeigen:
- Figur 1:: perspektivische Stirnansicht eines Schneidmessers nach der Erfindung;
- Figur 2:: die in Figur 2 unter Bezugszeichen 2 dargestellte Schneidpartie in vergrößerter Darstellung;
- Figur 3:: die Seitenansicht des Schneidmessers in vergrößerter Darstellung.
- Figur 4:: zeigt eine Seitenansicht des Schneidmessers mit Darstellung der Ausbildung verschiedener Winkelabweichungen

Zunächst wird darauf hingewiesen, dass das Schneidmesser nach der Erfindung vorwärts (in Bezug zur Relativbewegung zum Werkstück) gerichtete Schneidkanten und auch in rückwärts gerichteter Richtung angeordnete Schneidkanten aufweist. Das Schneidmesser ist sowohl also zum Vorwärtsentgraten als auch zum Rückwärtsentgraten geeignet. Hierauf ist die Erfindung jedoch nicht beschränkt. Die Erfindung kann auch vorsehen, dass nur das Schneidmesser an einer Seite die erfindungsgemäßen Schneidkanten aufweist, während beispielsweise die für das rückwärts gehende Entgraten vorhandenen Schneidkanten auch entfallen können.

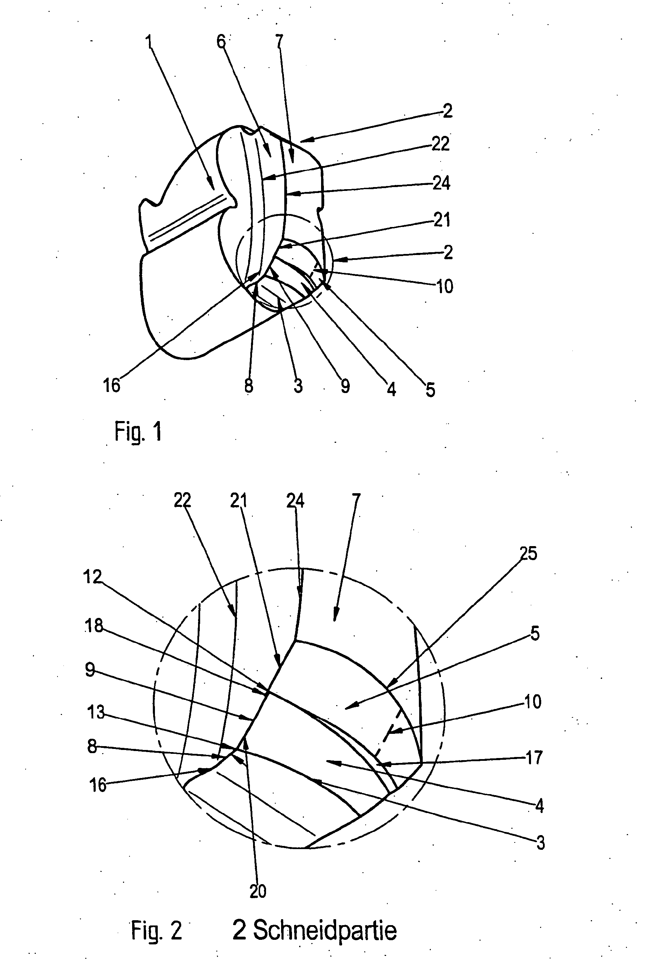

Das Schneidmesser 1 nach den Figuren 1 bis 3 weist einen Körper auf, der im Wesentlichen in einer Drehachse 14, beispielsweise in Pfeilrichtung 15, drehbar ist.

Die beiden Schneidpartien für das Vorwärts- und Rückwärtsentgraten sind im Übrigen bezüglich einer Mittenlinie 19 spiegelsymmetrisch zueinander angeordnet.

Dies ist jedoch nicht lösungsnotwendig. Es kann die Schneidpartie z. B. für das vorwärts gehende Entgraten anders ausgebildet sein, als vergleichsweise die Schneidpartie für das rückwärts gehende Entgraten.

Lediglich das Ausführungsbeispiel nach den Figuren 1 bis 3 zeigt eine symmetrische Anordnung der beiden Schneidpartien.

Es kann z. B. vorgesehen werden, dass in der vorwärts gehenden Bewegung eine andere Fase geschnitten werden soll, als in der rückwärts gehenden Bewegung, was erfordert, dass die beiden Schneidpartien 2, 2 gemäß Figur 1 anders ausgebildet sind.

Dies bezieht sich auf alle geometrischen Dimensionen der nachfolgend beschriebenen Schneidpartie 2.

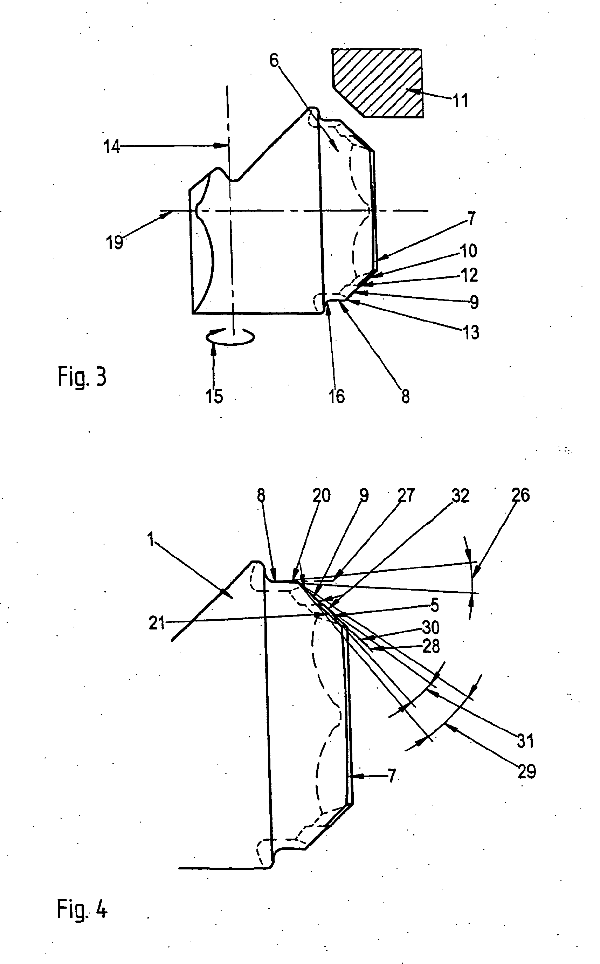

Die Schneidpartie 2 besteht zunächst aus einer Freifläche 3, die hinter der Schneidkante 8 zurücktritt. Die Schneidkante 8 wird auch als D-Schneidkante bezeichnet und bildet - gemäß Figur 3 - die vertikale Schneidfläche, die vorstehend in der allgemeinen Beschreibung erwähnt wurde. Mit dieser Schneidkante wird eine besonders aggressive Schneidaktion bei gutem Wirkungsgrad erreicht.

Die sich daran anschließende Freifläche 3 dient nur zur Freistellung der Schneidkante 8.

Die Schneidkante 8 fängt im Übrigen in axialer Richtung zur Längsmittenachse 19 bei der Position 16 an und erstreckt sich - wie ausgeführt - etwa in vertikaler Richtung zur Position 13.

Im allgemeinen Beschreibungsteil wurde schon darauf hingewiesen, dass der Winkel zur Vertikalen nicht genau parallel sein muss; es können auch Winkel im Bereich zwischen 45° bis 120° vorgesehen werden.

Die gerade, besonders aggressiv schneidende Schneidkante 8 geht bei Position 13 in eine weitere, sich im Winkel daran anschließende Schneidkante 9 über, die nachfolgend auch als S-Schneidkante bezeichnet wird.

Wichtig ist, dass die beiden Schneidkanten 8, 9 einen Winkel 20 miteinander einschließen, der in weiten Grenzen geändert werden kann.

Der Vorteil der im Winkel 20 zu der Schneidkante 8 abgewinkelten Schneidkante 9 ist, dass die Schneidkante 9 nun mit hoher Genauigkeit - weil sie schräg in die Bohrung des Werkstücks 11 eintritt - schneidet.

Daher geht auch die der Schneidkante 8 zugeordnete Freifläche 3 in eine der Schneidkante 9 zugeordnete Freifläche 4 über.

Diese beiden Freiflächen haben nur die Aufgabe, hinter den vorgenannten Schneidkanten 8, 9 zurückzutreten, um diesen eine Schneidaktion zu ermöglichen.

Die schräg geneigte Schneidkante 9 ist in sich gerade ausgebildet und verläuft bis zur Position 12 beim Übergang 18 in gerader Ausführung.

Die linienförmige Ausbildung der Schneidkante 9 ist jedoch nicht zwingend notwendig. Sie könnte auch geringfügig bogenförmig ausgebildet sein.

Sie verläuft bis zur Position 12, wo sich ein Übergang 18 bildet. Dieser Übergang besteht darin, dass in Bezug auf die Zeichenebene der Figur 2 die Schneidkante 9 bei Position 12 höher liegt, als die sich daran anschließende, tiefer liegende Freikante 21, die keinerlei Schneidaktion ausführt.

Diese Schneidkanten 8, 9 und die Freikante 21 begrenzen eine Spanfläche 6, die unterhalb der Schneidkanten 8, 9 liegt und die sich etwa konisch von der Position 16 aus nach außen öffnet, zwischen den Linien 22 und 24. Dies ist aus Figur 1 oder 2 zu entnehmen.

Die Freikante 21 setzt sich somit in eine, im Winkel daran anschließende Linie 24 fort, welche insgesamt auch die Spanfläche 6 begrenzt, wie aus Figur 1 oder 2 zu entnehmen ist.

Wichtig ist nun, dass sich an die schräge Schneidkante 9 eine Freikante 21 auf der Steuerfläche 5 anschließt. Diese Steuerfläche 5 hat keinerlei schneidende Aktion und wird einerseits auf der Seite der Schneidkanten 8, 9 durch die Freikante 21 begrenzt und andererseits auf der, der Schneidkanten 8, 9 umfänglich entgegen der Drehrichtung 15 gegenüberliegenden Seiten durch die Randbegrenzungen eines Zwickels 17, der sich zwischen der Freifläche 4 und Steuerfläche 5 ergibt.

Der Zwickel 17 ergibt sich als Absatz zwischen den beiden nebeneinander liegenden Flächen 4, 5, die gegeneinander in der Höhe zur Zeichenebene der Figur 2 versetzt angeordnet sind.

Dies führt dazu, dass die Steuerkante 10 höher liegt, als die Freifläche 4, damit diese Steuerkante 10 zuerst in Berührung mit der zu entgratenden Fase kommen kann.

Die Steuerkante 10 ist im Übrigen gleich hoch, wie die schräg geneigte Schneidkante 9.

Dies führt zu dem wesentlichen Vorteil des erfindungsgemäßen Schneidmessers 1, was bedeutet, dass, wenn die Schneidkante 9 in Berührung mit der zu entgratenden Fase kommt, dann gleichzeitig oder aber etwas später die Steuerkante 10 sanft in Einsatz kommt und die Schneidaktion der Schneidkante 9 nachfolgend beendet. Diese Beendigung der Schneidaktion der Schneidkante 9 erfolgt aber erst dann, wenn die gewünschte Fasengröße erreicht wurde.

Wichtig ist, dass sich an die Steuerfläche 5 eine Gleitfläche 7 anschließt. Die beiden Flächen 5, 7 sind durch eine bogenförmige Kante 25 voneinander abgegrenzt.

Wie sich aus Figur 3 ergibt, schließt sich die Gleitfläche 7 im Winkel an die Steuerfläche 5 und die dort ausgebildete Steuerkante 10 an. Dies bedeutet, dass die Gleitfläche 7 keinerlei Schneidaktion übernimmt und auch keinerlei Steuerfunktion hat. Sie ist lediglich ein stirnseitiger Abschluss des Schneidmessers.

Die Gleitfläche 7 ist bombiert, um beim Einfahren auf eine Bohrung des Werkstücks 11 keine Beschädigung zu verursachen.

Figur 4 zeigt das Messer nach der Erfindung in Seitenansicht, wobei verschiedene Winkelvariationen eingetragen sind.

Es ist angegeben, dass der Winkel 27 der Schneidkante 9 und der Freikante 21 (dies ist der Winkel 32) variabel sein kann.

Die Figur 4 zeigt ferner, dass der Winkel der Schneidkante 9 effektiv mit 28 angegeben ist, dieser aber im Bereich des variablen Winkels 29 veränderbar ist.

Damit ist dargestellt, dass nicht notwendigerweise an die Schneidkante 9 im gleichen Winkel die Steuerfläche 5 anschließen muss. Dies ist lediglich im Ausführungsbeispiel so dargestellt.

Die Figur 4 zeigt, dass statt des effektiven Winkels 30 der Steuerfläche 5 auch dieser Winkel um das Maß des Winkels 31 variieren kann.

Damit ist klargestellt, dass die Steuerfläche 5 sich im Winkel an die Schneidkante 9 anschließen kann.

### Zeichnungslegende

- 1: Schneidmesser
- 2: Schneidpartie
- 3: Freifläche (D)
- 4: Freifläche (S)
- 5: Steuerfläche
- 6: Spanfläche
- 7: Gleitfläche
- 8: Schneidkante (D)
- 9: Schneidkante (S)
- 10: Steuerkante
- 11: Werkstück
- 12: Position
- 13: Position
- 14: Drehachse
- 15: Pfeilrichtung
- 16: Position
- 17: Zwickel
- 18: Übergang
- 19: Mittenlinie
- 20: Winkel
- 21: Freikante
- 22: Linie
- 23: -
- 24: Linie
- 25: Kante
- 26: Winkel, variabel (Schneidkante 8)
- 27: Winkel, effektiv (Schneidkante 8)
- 28: Winkel, effektiv (Schneidkante 9)
- 29: Winkel, variabel (Schneidkante 9)
- 30: Winkel, effektiv (Steuerfläche 5)
- 31: Winkel, variabel (Steuerfläche 5)
- 32: Winkel

## Patentansprüche

1. Entgratmesser zum Entgraten von Bohrungsrändern an Werkstücken, beinhaltend mindestens ein Schneidmesser (1), welches mindestens eine Schneidpartie (2) mit mindestens einer Schneidkante (8, 9) und mindestens einer Steuerfläche (5) aufweist, wobei das Schneidmesser (1) in einer Werkzeugaufnahme aufgenommen ist, welche um eine Drehachse (14) in mindestens einer Drehrichtung (15) drehbar ist, **dadurch gekennzeichnet, dass** die mindestens eine Schneidpartie (2) eine erste Schneidkante (8) aufweist, an die sich unmittelbar oder mittelbar eine zweite Schneidkante (9) anschließt, an die sich mittelbar über einen Übergang (18) eine nicht schneidende Freikante (21) anschließt, welche radial zur Drehachse (14) im Bezug auf die zweite Schneidkante (9) rückversetzt ist, wobei die erste Schneidkante (8) mit der Drehachse (14) einen Winkel im Bereich von etwa 45° bis 120, typischerweise 90° einschließt und wobei die zweite Schneidkante (9) zum einen mit der Drehachse (14) einen Winkel im Bereich von 0° bis 90°, typischerweise 45°, und zum anderen mit der ersten Schneidkante (8) einen Außenwinkel (20) von größer 180° einschließt.

2. Entgratmesser nach Anspruch 1, **dadurch gekennzeichnet, dass** sich entgegen der Drehrichtung (15) gesehen hinter der Freikante (21) eine Steuerkante (10) befindet, welche mindestens teilweise in der gleichen Kegelfläche bezüglich der Drehachse (14) liegt, wie die zweite Schneidkante (9).

3. Entgratmesser nach Anspruch 1, **dadurch gekennzeichnet, dass** die Freikante (21) mit der zweiten Schneidkante (9) einen Winkel (32) im Bereich von etwa 90° bis 270° (typisch 180°) einschließt.

4. Entgratmesser nach Anspruch 1 oder 2, **dadurch gekennzeichnet, dass** die erste Schneidkante (8), die zweite Schneidkante (9) und die Freikante (21) in dieser Reihenfolge von radial innen nach radial außen in Bezug auf die Drehachse (14) angeordnet sind.

5. Entgratmesser nach Anspruch 1 bis 4, **dadurch gekennzeichnet, dass** die Schneidkanten (8, 9) und/oder die Freikante (21) gerade oder bogenförmig verlaufen.

6. Entgratmesser nach Anspruch 1 bis 5, **dadurch gekennzeichnet, dass** das Schneidmesser (1) zwei Schneidpartien (2) aufweist und **dadurch** sowohl zum Vorwärtsentgraten, als auch zum Rückwärtsentgraten geeignet ist.

7. Entgratmesser nach Anspruch 6, **dadurch gekennzeichnet, dass** die zwei Schneidpartien (2) achsensymmetrisch zur Längsmittenachse (19) des Schneidmessers (1) und/oder punktsymmetrisch zu einem Punkt auf der Längsmittenachse (19) des Schneidmessers (1) angeordnet sind.

8. Entgratmesser nach Anspruch 1 bis 7, **dadurch gekennzeichnet, dass** sich entgegen der Drehrichtung (15) gesehen hinter der ersten Schneidkante (8) und/oder der zweiten Schneidkante (9) eine Freifläche (3, 4) befindet.

9. Entgratmesser nach Anspruch 1 bis 8, **dadurch gekennzeichnet, dass** die Freiflächen (3, 4) einen Hinterschnitt hinter den Schneidkanten (8, 9) bilden.

10. Entgratmesser nach Anspruch 1 bis 9, **dadurch gekennzeichnet, dass** sich entgegen der Drehrichtung (15) gesehen hinter der Freikante (21) die Steuerfläche (5) befindet.

11. Entgratmesser nach Anspruch 10, **dadurch gekennzeichnet, dass** zwischen der Freifläche (4) der zweiten Schneidkante (9) und der Steuerfläche (5) ein dreieckförmiger Zwickel (17) gebildet ist.

12. Entgratmesser nach Anspruch 1 bis 11, **dadurch gekennzeichnet, dass** die Grenzlinien der Flächen (3-5) entgegen der Drehrichtung (15) gesehen hinter den Kanten (8, 9, 21) gerade oder bogenförmig verlaufen.

13. Entgratmesser nach Anspruch 1 bis 12, **dadurch gekennzeichnet, dass** sich an die Steuerfläche (5) eine bombierte Gleitfläche (7) als stirnseitiger zur Drehachse (14) radial äußerer Abschluss des Schneidmessers (1) anschließt.

14. Entgratmesser nach Anspruch 1 bis 13, **dadurch gekennzeichnet, dass** sich mindestens von den Schneidkanten (8, 9) aus in Richtung Drehachse (14) eine Spanfläche (6) zur Spanabfuhr erstreckt.

15. Entgratmesser nach Anspruch 14, **dadurch gekennzeichnet, dass** sich die Spanfläche (6) auch von der Freikante (21) und/oder der zur Drehachse (14) radial äußeren Gleitfläche (7) aus in Richtung Drehachse (14) erstreckt.

## Claims

1. Deburring blade for deburring bore edges on workpieces containing at least one cutting blade (1), which has at least one cutting portion (2) with at least one cutting edge (8, 9) and at least one control face (5), wherein the cutting blade (1) is received in a tool holder, which can be rotated about a rotational axis (14) in at least one rotational direction (15), **characterised in that** the at least one cutting portion (2) has a first cutting edge (8), adjoined directly or indirectly by a second cutting edge (9), adjoined indirectly, via a transition (18), by a non-cutting free edge (21), which is set back radially with respect to the rotational axis (14) in relation to the second cutting edge (9), the first cutting edge (8) enclosing with the rotational axis (14) an angle in the range of about 45° to 120°, typically 90°, and the second cutting edge (9), on the one hand, enclosing with the rotational axis (14) an angle in the range of 0° to 90°, typically 45°, and, on the other hand, enclosing with the first cutting edge (8) an exterior angle (20) of greater than 180°.

2. Deburring blade according to claim 1, **characterised in that**, viewed counter to the rotational direction (15), behind the free edge (21), is situated a control edge (10), which is located at least partially on the same conical surface with respect to the rotational axis (14) as the second cutting edge (9).

3. Deburring blade according to claim 1, **characterised in that** the free edge (21) with the second cutting edge (9) encloses an angle (32) in the range of about 90° to 270° (typically 180°).

4. Deburring blade according to claim 1 or 2, **characterised in that** the first cutting edge (8), the second cutting edge (9) and the free edge (21) are arranged, in this order, from radially inside to radially outside in relation to the rotational axis (14).

5. Deburring blade according to claim 1 to 4, **characterised in that** the cutting edges (8, 9) and/or the free edge (21) extend straight or in an arcuate manner.

6. Deburring blade according to claim 1 to 5, **characterised in that** the cutting blade (1) has two cutting portions (2) and is thus suitable both for forwards deburring and also for backwards deburring.

7. Deburring blade according to claim 6, **characterised in that** the two cutting portions (2) are arranged axially symmetrically with respect to the longitudinal centre axis (19) of the cutting blade (1) and/or point-symmetrically to a point on the longitudinal centre axis (19) of the cutting blade (1).

8. Deburring blade according to claim 1 to 7, **characterised in that**, viewed counter to the rotational direction (15), behind the first cutting edge (8) and/or the second cutting edge (9), is located a free face (3, 4).

9. Deburring blade according to claim 1 to 8, **characterised in that** the free faces (3, 4) form an undercut behind the cutting edges (8, 9).

10. Deburring blade according to claim 1 to 9, **characterised in that**, viewed counter to the rotational direction (15), behind the free edge (21), is located the control face (5).

11. Deburring blade according to claim 10, **characterised in that** formed between the free face (4) of the second cutting edge (9) and the control face (5) is a triangular interstice (17).

12. Deburring blade according to claim 1 to 11, **characterised in that** the limit lines of the faces (3 to 5), viewed counter to the rotational direction (15), extend straight or in an arcuate manner behind the edges (8, 9, 21).

13. Deburring blade according to claim 1 to 12, **characterised in that** a crowned sliding face (7) as an end face termination, which is radially outer with respect to be rotational axis (14), of the cutting blade (1), adjoins the control face (5).

14. Deburring blade according to claim 1 to 13, **characterised in that** a chip face (6) for chip removal extends at least from the cutting edges (8, 9) in the direction of the rotational axis (14).

15. Deburring blade according to claim 14, **characterised in that** the chip face (6) also extends from the free edge (21) and/or the sliding face (7), which is radially outer with respect to the rotational axis (14), in the direction of the rotational axis (14).

## Revendications

1. Lame d'ébavurage pour ébavurer le bord de trous sur des pièces à usiner, comprenant au moins une lame de coupe (1) qui présente au moins une partie de coupe (2) avec au moins une arête coupante (8, 9) et au moins une surface de commande (5), la lame de coupe (1) étant logée dans un logement d'outil qui est apte à tourner sur un axe de rotation (14) dans au moins un sens de rotation (15),
**caractérisée en ce que** la ou les parties de coupe (2) présentent une première arête coupante (8) à laquelle fait suite directement ou indirectement une seconde arête coupante (9) à laquelle fait suite indirectement, par l'intermédiaire d'une transition (18), une arête de dégagement non coupante (21) située en retrait de la seconde arête coupante (9), radialement par rapport à l'axe de rotation (14), la première arête coupante (8) définissant avec l'axe de rotation (14) un angle situé dans la plage d'environ 45° à 120°, typiquement de 90°, et la seconde arête coupante (9) définissant d'une part avec l'axe de rotation (14) un angle situé dans la plage de 0° à 90°, typiquement de 45°, et d'autre part avec la première arête coupante (8) un angle extérieur (20) supérieur à 180°.

2. Lame d'ébavurage selon la revendication 1, **caractérisée en ce qu'**il est prévu, derrière l'arête de dégagement (21) si on considère le sens inverse au sens de rotation (15), une arête de commande (10) qui est située au moins en partie dans la même surface conique, par rapport à l'axe de rotation (14), que la seconde arête coupante (9).

3. Lame d'ébavurage selon la revendication 1, **caractérisée en ce que** l'arête de dégagement (21) définit avec la seconde arête coupante (9) un angle (32) situé dans la plage d'environ 90° à 270° (typiquement de 180°).

4. Lame d'ébavurage selon la revendication 1 ou 2, **caractérisée en ce que** la première arête coupante (8), la seconde arête coupante (9) et l'arête de dégagement (21) sont disposées dans cet ordre de l'intérieur vers l'extérieur, radialement par rapport à l'axe de rotation (14).

5. Lame d'ébavurage selon les revendications 1 à 4, **caractérisée en ce que** les arêtes coupantes (8, 9) et/ou l'arête de dégagement (21) sont droites ou courbes.

6. Lame d'ébavurage selon les revendications 1 à 5, **caractérisée en ce que** la lame de coupe (1) présente deux parties de coupe (2) et, de ce fait, convient aussi bien pour l'ébavurage avant que pour l'ébavurage arrière.

7. Lame d'ébavurage selon la revendication 6, **caractérisée en ce que** les deux parties de coupe (2) sont disposées avec une symétrie axiale par rapport à l'axe longitudinal médian (19) de la lame de coupe (1) et/ou avec une symétrie par rapport à un point sur l'axe longitudinal médian (19) de la lame de coupe (1).

8. Lame d'ébavurage selon les revendications 1 à 7, **caractérisée en ce qu'**une face de dégagement (3, 4) se trouve derrière la première arête coupante (8) et/ou la seconde arête coupante (9), si on considère le sens inverse par rapport au sens de rotation (15).

9. Lame d'ébavurage selon les revendications 1 à 8, **caractérisée en ce que** les faces de dégagement (3, 4) forment une contre-dépouille derrière les arêtes coupantes (8, 9).

10. Lame d'ébavurage selon les revendications 1 à 9, **caractérisée en ce que** la surface de commande (5) se trouve derrière l'arête de dégagement (21), si on considère le sens inverse au sens de rotation (15).

11. Lame d'ébavurage selon la revendication 10, **caractérisée en ce qu'**un coin triangulaire (17) est formé entre la face de dégagement (4) de la seconde arête coupante (9) et la surface de commande (5).

12. Lame d'ébavurage selon les revendications 1 à 11, **caractérisée en ce que** les démarcations des surfaces (3-5) sont droites ou courbes derrière les arêtes (8, 9, 21) si on considère le sens inverse au sens de rotation (15).

13. Lame d'ébavurage selon les revendications 1 à 12, **caractérisée en ce qu'**une surface de glissement bombée (7) fait suite à la surface de commande (5), sous la forme d'une terminaison frontale radialement extérieure, par rapport à l'axe de rotation (14), de la lame coupante (1).

14. Lame d'ébavurage selon les revendications 1 à 13, **caractérisée en ce qu'**une surface d'attaque (6) destinée à l'évacuation des copeaux s'étend au moins à partir des arêtes coupantes (8, 9) en direction de l'axe de rotation (14).

15. Lame d'ébavurage selon la revendication 14, **caractérisée en ce que** la surface d'attaque (6) s'étend aussi à partir de l'arête de dégagement (21) et/ou de la surface de glissement (7) radialement extérieure par rapport à l'axe de rotation (14), en direction de l'axe de rotation (14).
